(19) 

**Europäisches Patentamt**
**European Patent Office**
**Office européen des brevets**

(11) **EP 4 672 714 A1**

(12) **EUROPEAN PATENT APPLICATION**
published in accordance with Art. 153(4) EPC

(43) Date of publication:
**31.12.2025 Bulletin 2026/01**

(21) Application number: **24759585.3**

(22) Date of filing: **07.02.2024**

(51) International Patent Classification (IPC):
*H04L 65/80* (2022.01)

(52) Cooperative Patent Classification (CPC):
**H04L 65/613; H04L 65/80**

(86) International application number:
**PCT/CN2024/076593**

(87) International publication number:
**WO 2024/174908 (29.08.2024 Gazette 2024/35)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.02.2023  CN 202310139262**

(71) Applicant: **Douyin Vision Co., Ltd.
Beijing 100041 (CN)**

(72) Inventors:
• **FU, Hang
  Beijing 100028 (CN)**
• **ZHANG, Wei
  Beijing 100028 (CN)**
• **HUANG, Huisheng
  Beijing 100028 (CN)**
• **WANG, Wei
  Beijing 100028 (CN)**

(74) Representative: **Isarpatent
Patent- und Rechtsanwälte
Barth Hassa Peckmann & Partner mbB
Friedrichstraße 31
80801 München (DE)**

(54) **BITRATE CONTROL METHOD, APPARATUS, MEDIA SERVER, TERMINAL DEVICE, AND STORAGE MEDIUM**

(57)     Provided in the embodiments of the present disclosure are a bitrate control method, an apparatus, a media server, a terminal device and a storage medium. The method comprises: on the basis of available bandwidth information of a plurality of subscription clients, generating discrete bandwidth information for the subscription clients, the discrete bandwidth information indicating an available bandwidth allocated for the subscription clients and a bandwidth interval where the available bandwidth is located; aggregating a plurality of pieces of the discrete bandwidth information into aggregated bandwidth information, the aggregated bandwidth information indicating a candidate available bandwidth of each bandwidth interval and the aggregated number of subscription clients in each bandwidth interval; and pushing the aggregated bandwidth information to a publishing client, the aggregated bandwidth information being used for the publishing client to determine a stream pushing bitrate.

On the basis of available bandwidth information of a plurality of subscription clients, generate discrete bandwidth information for the subscription clients, the discrete bandwidth information indicating an available bandwidth allocated to the subscription clients and a bandwidth interval where the available bandwidth is located — S11

Aggregate a plurality of pieces of the discrete bandwidth information into aggregated bandwidth information, the aggregated bandwidth information indicating a candidate available bandwidth of each bandwidth interval and the aggregation number of the subscription clients in each bandwidth interval — S13

Push the aggregated bandwidth information to a publishing client, the aggregated bandwidth information being used for the publishing client to determine a stream pushing bitrate — S15

Fig. 1

## Description

This application claims the priority to and benefits of the Chinese Patent Application No. 202310139262.5, which was filed on February 20, 2023. The aforementioned Chinese patent application is hereby incorporated by citation in its entirety as part of the present application.

TECHNICAL FIELD

The present disclosure relates to a bit rate control method, an apparatus, a media server, a terminal device and a storage medium.

BACKGROUND

Currently, in a real-time communication process involving a plurality of persons, a publishing client can push an audio and video stream to a plurality of subscripted clients. Specifically, the publishing client usually encodes the audio and video stream according to a preset bit rate, and pushes the encoded audio and video stream to each subscribed client.

However, in a practical application scenario, when the subscripted client loads the encoded audio and video stream via a downlink, it is likely that the bit rate of the audio and video stream does not match an available bandwidth thereof. When the bit rate of the audio and video stream is significantly higher or significantly lower than the available bandwidth of the subscripted client, it will lead to poor communication quality in the communication process.

SUMMARY

In view of this, one or more embodiments of the present disclosure provide a bit rate control method, an apparatus, a media server, a terminal device and a storage medium, that is capable of improving communication quality in the communication process involving a plurality of persons.

In one aspect, the present disclosure provides a bit rate control method, comprising: generating discrete bandwidth information for a plurality of subscripted clients based on available bandwidth information of the plurality of subscripted clients, the discrete bandwidth information indicating an available bandwidth allocated for the subscripted clients and a bandwidth interval where the available bandwidth is located; aggregating a plurality of pieces of the discrete bandwidth information into aggregated bandwidth information, the aggregated bandwidth information indicating a candidate available bandwidth of each bandwidth interval and an aggregation number of the subscripted clients in each bandwidth interval; and pushing the aggregated bandwidth information to a publishing client, the aggregated bandwidth information being used for the publishing client to determine a stream pushing bit rate.

In another aspect, the present disclosure provides a bit rate control apparatus, comprising: a discrete bandwidth information generation unit configured for generating discrete bandwidth information for a plurality of subscripted clients based on available bandwidth information of the plurality of subscripted clients, the discrete bandwidth information indicating an available bandwidth allocated for the subscripted clients and a bandwidth interval where the available bandwidth is located; an aggregation unit configured for aggregating a plurality of pieces of the discrete bandwidth information into aggregated bandwidth information, the aggregated bandwidth information indicating a candidate available bandwidth of each bandwidth interval and an aggregation number of the subscripted clients in each bandwidth interval; and a pushing unit configured for pushing the aggregated bandwidth information to a publishing client, the aggregated bandwidth information being used for the publishing client to determine a stream pushing bit rate.

In another aspect, the present disclosure provides a media server, comprising a memory and a processor, wherein the memory is configured to store computer programs which, when executed by the processor, implement the bit rate control method described above.

In another aspect, the present disclosure provides a bit rate control method, comprising: receiving aggregated bandwidth information from a media server, the aggregated bandwidth information indicating a candidate available bandwidth of each bandwidth interval and an aggregation number of the subscripted clients in each bandwidth interval; determining a stream pushing bit rate according to the aggregated bandwidth information; encoding an audio and video stream according to the stream pushing bit rate; and pushing an encoded audio and video stream to each subscribed client.

In another aspect, the present disclosure provides a bit rate control apparatus, comprising: an information receiving unit configured for receiving aggregated bandwidth information from a media server, the aggregated bandwidth information indicating a candidate available bandwidth of each bandwidth interval and an aggregation number of the subscripted clients in each bandwidth interval; a bit rate determination unit configured for determining a stream pushing bit rate according to the aggregated bandwidth information, and encoding an audio and video stream according to the stream pushing bit rate; and an audio and video stream pushing unit configured for pushing an encoded audio and video stream to each subscribed client.

In another aspect, the present disclosure provides a terminal device, comprising a memory and a processor, wherein the memory is configured to store computer programs which, when executed by the processor, implement the bit rate control method described above.

In another aspect, the present disclosure provides a computer-readable storage medium, wherein the computer-readable storage medium is configured to store computer programs which, when executed by a processor, implement the bit rate control method described above.

BRIEF DESCRIPTION OF DRAWINGS

The features and advantages of various embodiments of the present disclosure will be more clearly understood by reference to the accompanying drawings, which are schematic and are not to be construed as limiting the disclosure in any way, and in which:

> Fig. 1 is a schematic diagram of steps of a bit rate control method according to an embodiment of the present disclosure;
> Fig. 2 is a schematic diagram of an architecture of a system according to an embodiment of the present disclosure;
> Fig. 3 is a schematic diagram of a step of generating discrete bandwidth information according to an embodiment of the present disclosure;
> Fig. 4 is a schematic diagram of an architecture of a multi-level system according to an embodiment of the present disclosure;
> Fig. 5 is a schematic diagram of functional modules of a bit rate control apparatus according to an embodiment of the present disclosure;
> Fig. 6 is a schematic structural diagram of a media server according to an embodiment of the present disclosure; and
> Fig. 7 is a schematic diagram of steps of a bit rate control method according to another embodiment of the present disclosure.

DETAILED DESCRIPTION

In order to make the purpose, technical solutions and advantages of the embodiments of the disclosure clearer, the technical solutions in the embodiments of the disclosure will be described clearly and completely with the drawings. Obviously, the described embodiments are only a part of the embodiments of the disclosure, but not all embodiments. Based on the embodiments of the present disclosure, all other embodiments obtained by those skilled in the art without creative work belong to the scope of the present disclosure.

A communication process which is participated in by a plurality of persons may include, for example, a process of a video conference in which a client initiating desktop sharing may be a publishing client and other clients participating in the video conference may be subscribed clients. When pushing an audio and video stream to the subscribed clients via a media server, the publishing client usually performs encoding according to a preset bit rate built in a video conference software. For example, in the video conference software, a picture quality of an audio and video stream may be set to a resolution of 720P by default, and the resolution of 720P may correspond to a default bit rate (typically 3 Mb/s). Then, the publishing client encodes the audio and video stream according to the bit rate of 3 Mb/s, and pushes the encoded audio and video stream of 720P to each participating subscribed client through the media server of the video conference software.

At present, the communication process involving a plurality of persons is usually implemented through an SFU (Selective Forwarding Unit) architecture. Under the SFU architecture, the encoding process performed by the publishing client may be as described above. However, in practical application scenarios, since different subscribed clients may be in different network environments, if the bit rate of audio and video stream is significantly higher than the available bandwidth of most subscribed clients, it will lead to the situation that most subscribed clients get stuck in the communication process; if the bit rate of the audio and video stream is significantly lower than the available bandwidth of most subscribed clients, it may lead to a poor picture quality or sound quality. However, the existing SFU architecture usually cannot adaptively adjust an encoding rate of the publishing client. The reason is that some bit rate control protocols, such as TMMBR (Temporary Maximum Media Stream Bit Rate Request) protocol, REMB (Receiver Estimated Maximum Bitrate) protocol, etc. are generally only applicable to P2P (Point to Point) communication architecture or MCU (MultiPoint Control Unit) communication architecture, and cannot be well extended to the SFU architecture.

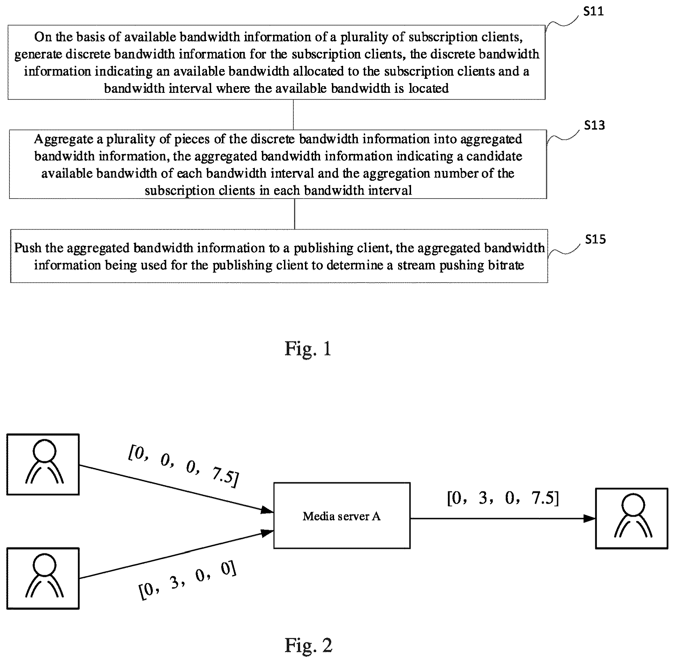

To solve the above-mentioned problems, an embodiment of the present disclosure provides a bit rate control method that can be applied to a media server of a multi-person communication software. The media server may be a server under the SFU architecture for storing and/or forwarding audio and video data between the publishing client and the subscribed clients. The data processing logic of the media server may be improved in this embodiment. Referring to Fig. 1, the method may include the following steps.

S11: On the basis of available bandwidth information of a plurality of subscribed clients, generate discrete bandwidth information for the subscribed clients, the discrete bandwidth information indicating an available bandwidth allocated for the subscribed clients and a bandwidth interval where the available bandwidth is located.

Referring to Fig. 2, in this embodiment, the plurality of subscribed clients may access the same media server. In practical applications, the subscribed client may actively report its own available bandwidth information to the media server, and the media server may also detect the available bandwidth information of each subscribed client through a preset congestion control and bandwidth allocation algorithm. The available bandwidth information actively reported by the subscripted clients may represent a downlink bit rate which can be supported thereby, and may also represent an idle downlink bit rate under a current load state. Of course, the available bandwidth information may have different meanings in different scenarios, and the present disclosure is not limited thereto. The available bandwidth information detected by the media server may generally represent the downlink bit rate that the media server can allocate to the subscribed clients. In practical applications, the downlink bit rate detected by the media server is generally less than or equal to the downlink bit rate actively reported by the subscribed client.

In this embodiment, when the media server uses a congestion control and bandwidth allocation algorithm to probe for available bandwidth information, a congestion window can be initialized, and the congestion window may represent the amount of data pushed by the media server to the subscribed client. The media server may send a detection message to the subscribed client according to the congestion window, and when the media server receives a response message returned by the subscribed client, the congestion window may be increased. When the network is congested, resulting in that the subscribed client cannot timely return a detection message, the media server can appropriately reduce the congestion window. With this congestion control approach, the media server can eventually determine the available bandwidth allocated for the subscribed clients.

Of course, in practical applications, congestion control and bandwidth allocation algorithms are implemented in many ways, and different algorithms can be flexibly selected according to different scenario requirements, and the present disclosure is not limited thereto.

In this embodiment, after obtaining the available bandwidth information for the subscribed clients in any approach, the media server may further determine the available bandwidth allocated for the subscribed clients. Specifically, if the available bandwidth reported by the subscribed client is less than a maximum available bandwidth that can be allocated by the media server, then the available bandwidth reported by the subscribed client may be taken as the available bandwidth allocated by the media server for the subscribed client; and if the available bandwidth reported by the subscribed client is greater than or equal to the maximum available bandwidth that can be allocated by the media server, then the maximum available bandwidth that can be allocated by the media server may be taken as the available bandwidth allocated by the media server for the subscribed client. Further, if the media server detects the available bandwidth through the congestion control and bandwidth allocation algorithms, the detected available bandwidth may be used as the available bandwidth allocated by the media server for the subscribed client.

It should be noted that in some cases, in order to control a load of the media server, the available bandwidth allocated for the subscribed client by the media server may not reach the maximum available bandwidth of the subscribed client itself. For example, the maximum available bandwidth actively reported by the subscribed client is 150 Mb/s, but the maximum available bandwidth allocated for the subscribed client by the media server may be only 10 Mb/s.

In this embodiment, the media server, after allocating available bandwidth to each subscribed client, may further generate respective discrete bandwidth information for each subscribed client. Specifically, the media server may set a plurality of bandwidth intervals in advance according to an upper limit value of available bandwidth that can be provided. For example, the media server may allocate up to 10 Mb/s of available bandwidth for the subscribed client, and the media server may generate four bandwidth intervals, which may be, for example, 0 to 2 Mb/s, 2 Mb/s to 6 Mb/s, 6 Mb/s to 8 Mb/s, and 8 Mb/s to 10 Mb/s. Of course, the number of bandwidth intervals may be partitioned in advance according to actual situations, and the present disclosure is not limited thereto.

In the present embodiment, after dividing a plurality of bandwidth intervals, for a certain subscribed client, the bandwidth interval in which the available bandwidth allocated by the media server for the subscribed client is located can be determined. For example, if the available bandwidth allocated for a certain subscribed client is 4 Mb/s, the available bandwidth of the subscripted client may be within the second bandwidth interval described above. In practical applications, the available bandwidth allocated by the media server for the subscribed client and the bandwidth interval in which the available bandwidth is located can be recorded in the discrete bandwidth information of the subscribed client.

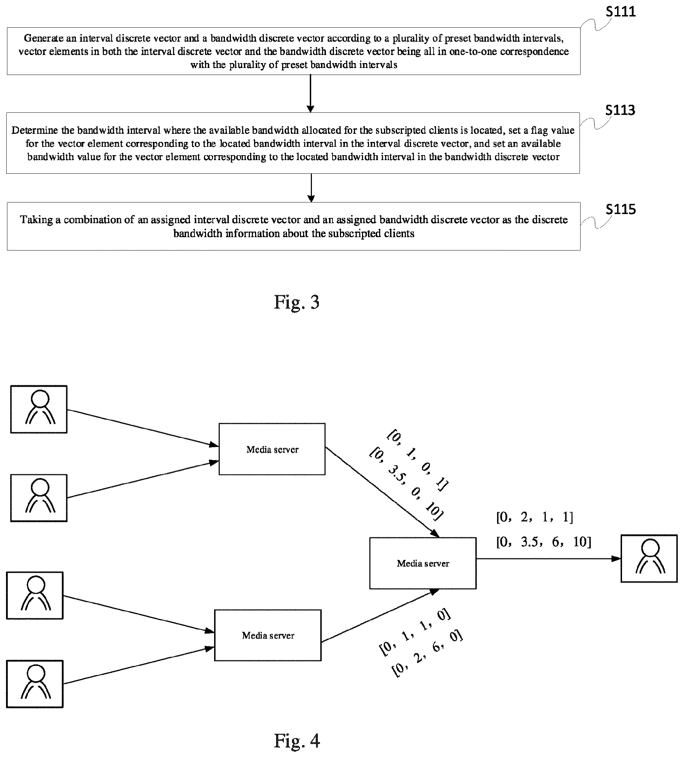

In one embodiment, to improve the efficiency of data processing, discrete bandwidth information for subscripted clients may be represented in the form of vectors. Specifically, referring to Fig. 3, the process of generating the discrete bandwidth information may include the following steps.

S111: Generate an interval discrete vector and a bandwidth discrete vector according to a plurality of preset bandwidth intervals, vector elements in both the interval discrete vector and the bandwidth discrete vector being all in one-to-one correspondence with the plurality of preset bandwidth intervals.

In the present embodiment, the interval discrete vector and the bandwidth discrete vector may be respectively generated according to a plurality of bandwidth intervals partitioned in advance by the media server. The number of vector elements in both the interval discrete vector and the bandwidth discrete vector may be consistent with the number of bandwidth intervals. For example, the media server currently partitions four bandwidth intervals, and then both the interval discrete vector and the bandwidth discrete vector may contain four vector elements. Thus, the vector elements in both the interval discrete vector and the bandwidth discrete vector may in one-to-one correspondence with the plurality of preset bandwidth intervals. For example, for the preset four bandwidth intervals, an interval discrete vector V1 and a bandwidth discrete vector V2 can be generated:

$$V1=[0, 0, 0, 0]$$

$$V2=[0, 0, 0, 0]$$

It can be seen that initial values of the vector elements in the interval discrete vector V1 and the bandwidth discrete vector V2 may both be 0, and each vector element corresponds to one bandwidth interval. For example, a first vector element corresponds to the bandwidth interval of 0 to 2Mb/s and a third vector element corresponds to the bandwidth interval of 6Mb/s to 8Mb/s.

S113: Determine the bandwidth interval where the available bandwidth allocated for the subscripted clients is located, set a flag value for the vector element corresponding to the located bandwidth interval in the interval discrete vector, and set an available bandwidth value for the vector element corresponding to the located bandwidth interval in the bandwidth discrete vector.

In this embodiment, part of the vector elements in both the interval discrete vector and the bandwidth discrete vector may be assigned with a value by identifying the available bandwidth of the subscripted client. For example, if the available bandwidth allocated for subscripted client A is 4 Mb/s, then the available bandwidth is located in the second bandwidth interval, so a flag value may be set for the second vector element in the interval discrete vector according to the rule of step S113. In practical applications, the flag value may be 1, representing that the available bandwidth of one subscripted client lies within the bandwidth interval. At the same time, an available bandwidth value may be set for a second vector element in the bandwidth discrete vector. The available bandwidth value may be the available bandwidth allocated by the media server for the subscripted client. Thus, the assigned interval discrete vector V1 and bandwidth discrete vector V2 can be expressed as:

$$V1=[0, 1, 0, 0]$$

$$V2=[0, 4, 0, 0]$$

By identifying these two vectors, it is known that the current available bandwidth of the subscripted client is 4 Mb/s and that the available bandwidth lies within the second bandwidth interval.

S115: Taking a combination of an assigned interval discrete vector and an assigned bandwidth discrete vector as the discrete bandwidth information about the subscripted clients.

In the present embodiment, after the interval discrete vector and the bandwidth discrete vector are assigned with values, a combination of the assigned two vectors can be used as the discrete bandwidth information about the subscripted client.

According to the above-mentioned steps S111 to S115, the media server may generate corresponding discrete bandwidth information for each accessed subscripted client one by one.

S13: Aggregate a plurality of pieces of the discrete bandwidth information into aggregated bandwidth information, the aggregated bandwidth information indicating a candidate available bandwidth of each bandwidth interval and the aggregation number of the subscripted clients in each bandwidth interval.

In this embodiment, after generating the discrete bandwidth information about each subscripted client, the media server may aggregate the discrete bandwidth information so as to obtain aggregated bandwidth information. In particular, the aggregated bandwidth information may be a summary of the discrete bandwidth information. In practical applications, various preset bandwidth intervals may be traversed, and taking any target bandwidth interval as an example, the following similar processing methods are used for each bandwidth interval:

With regard to the target bandwidth interval, according to each piece of generated discrete bandwidth information, the aggregation number of the subscripted clients of which the available bandwidth is located in the target bandwidth interval may be counted, and the candidate available bandwidth may be determined according to a plurality of available bandwidths located in the target bandwidth interval.

Specifically, assuming that the target bandwidth interval is 2 Mb/s to 6 Mb/s, according to the discrete bandwidth information about each subscripted client, the total number of the subscripted clients with available bandwidth located in the target bandwidth interval may be counted, and the total number may be used as the statistically obtained aggregation number. For example, if two subscripted clients have available bandwidths of 2.2 Mb/s and 4.5 Mb/s respectively, then the two available bandwidths are both within the target bandwidth interval, then the corresponding aggregation number of the target bandwidth interval may be 2. In determining the candidate available bandwidth corresponding to the target bandwidth interval, a plurality of available bandwidths (e.g. 2.2 Mb/s and 4.5 Mb/s as described above) located within the target bandwidth interval may be counted and the candidate available bandwidth is determined on the basis of the plurality of available bandwidths. In general, it is possible to take a maximum available bandwidth or a minimum available bandwidth from the plurality of available bandwidths located within the target bandwidth interval as the candidate available bandwidth, and it is also possible to perform weighted summation on the plurality of available bandwidths located within the target bandwidth interval, and take a resulting available bandwidth as the candidate available bandwidth. That is, the candidate available bandwidth is generated on the basis of the actual available bandwidth of the subscripted client, and may represent an overall situation of the actual available bandwidth of the subscripted client within the target bandwidth interval to some extent. In practical applications, the specific way to determine the candidate available bandwidth may be determined according to actual business requirements.

In the above-mentioned manner, for a target bandwidth interval, two parameters, namely, the aggregation number and the candidate available bandwidth, can be generated, and finally, a combination of the two parameters can be used as interval information about the target bandwidth interval. By the same reasoning for other bandwidth intervals, the interval information about each bandwidth interval can be finally obtained, and the set of the interval information can be used as aggregated bandwidth information obtained by aggregation.

The aggregated bandwidth information generated in the above-mentioned manner can represent the overall distribution of the available bandwidths of the subscripted clients, so as to provide an accurate data basis for the subsequent determination of the stream pushing bit rate, such that the stream pushing bit rate is also more consistent with actual business requirements.

In one embodiment, the vector representation in steps S111 to S115 may be continuously used to generate the aggregated bandwidth information. Specifically, for the interval discrete vector, the interval discrete vector in each piece of the discrete bandwidth information may be added to obtain an interval aggregation vector. For example, if the interval discrete vectors of two subscripted clients are V11=[1, 0, 0, 0] and V12=[0, 1, 0, 0] respectively, then the interval aggregation vector can be the result [1, 1, 0, 0] of adding the two together.

With regard to the bandwidth discrete vector, according to the above-mentioned manner of determining the candidate available bandwidth, the plurality of preset bandwidth intervals may be traversed, with regard to any target bandwidth interval therein, each available bandwidth value corresponding to the target bandwidth interval may be identified in the bandwidth discrete vector of each piece of the discrete bandwidth information, and the candidate available bandwidth of the target bandwidth interval is determined according to the identified each available bandwidth value. The specific manner in which the candidate available bandwidth is determined will not be described further herein, and reference may be made to the methods described above. After a corresponding candidate available bandwidth is determined for each bandwidth interval in the plurality of preset bandwidth intervals, a bandwidth aggregation vector containing each candidate available bandwidth may be generated. For example, when the bandwidth discrete vectors of two subscripted clients are V21=[0, 4.5, 0, 0] and V22=[0, 2, 0, 0] respectively, then when the maximum available bandwidth is taken as the candidate available bandwidth, the generated bandwidth aggregation vector may be [0, 4.5, 0, 0].

As another example, in Fig. 2, two subscripted clients accessing the media server A, the bandwidth discrete vectors in the discrete bandwidth information are [0, 0, 0, 7.5] and [0, 3, 0, 0] respectively, and then the bandwidth aggregation vector obtained by aggregation may be [0, 3, 0, 7.5].

In this embodiment, after generating the interval aggregation vector and the bandwidth aggregation vector, a combination of the two may be used as the aggregated bandwidth information obtained by aggregation. The aggregated bandwidth information may be represented by vector, which may make the aggregated bandwidth information more accurate and intuitive, and facilitate subsequent data processing.

S15: Push the aggregated bandwidth information to a publishing client, the aggregated bandwidth information being used for the publishing client to determine a stream pushing bit rate.

In this embodiment, after the aggregated bandwidth information is obtained via aggregation, the media server may push the aggregated bandwidth information to the publishing client. By parsing the aggregated bandwidth information, the publishing client may determine the current distribution of the available bandwidth of each subscripted client. For example, in one specific application example, the aggregated bandwidth information received by the publishing client may be represented by the following interval aggregation vector and bandwidth aggregation vectors

$$C1=[2, 4, 8, 1]$$

$$C2=[1.2, 3.5, 7, 10]$$

It can be seen that in the preset four bandwidth intervals, the number of distributed subscripted client(s) is 2, 4, 8 and 1 respectively, and the candidate available bandwidths of these four bandwidth intervals are 1.2 Mb/s, 3.5 Mb/s, 7 Mb/s and 10 Mb/s respectively.

In the present embodiment, the publishing client may determine the stream pushing bit rate based on the aggregated bandwidth information according to a preset rule. For example, the publishing client may determine the bandwidth interval in which the aggregation number of the subscripted client is highest, and then use the candidate available bandwidth corresponding to the bandwidth interval as the stream pushing bit rate. In this way, the bandwidth requirements of most subscripted clients may be met after the audio and video streams are subsequently encoded according to the stream pushing bit rate.

In one embodiment, considering that the media server in the SFU architecture may have a certain level, for example, in Fig. 4, the media server may be partitioned into two levels, the media server of a first level is connected to the subscripted client, and this part of the media server may generate the discrete bandwidth information about the subscripted client according to the contents described in steps S11 and S13, and aggregate the discrete bandwidth information to obtain the aggregated bandwidth information. The media server of a second level may receive the aggregated bandwidth information sent from the media server of the first level, then perform re-aggregation, and push a final aggregation result to the publishing client. By applying the technical solution of the present disclosure in a multi-level architecture, it can be more consistent with the actual business scenario, facilitating the implementation and expansion of the technical solution of the present disclosure.

Specifically, in one embodiment, after obtaining the aggregated bandwidth information via aggregation, the media server accessed by the subscripted client may upload the aggregated bandwidth information to a next-level media server, so that the next-level media server re-aggregates the received aggregated bandwidth information, and pushes the aggregated bandwidth information obtained via re-aggregation to the publishing client.

**In** addition, if the media server is located at a second level, the media server, in response to receiving a plurality of pieces of first aggregated bandwidth information uploaded by an upper-level media server, may re-aggregate the plurality of pieces of the first aggregated bandwidth information into second aggregated bandwidth information, and push the second aggregated bandwidth information to the publishing client, such that the publishing client determines the stream pushing bit rate according to the second aggregated bandwidth information, and encodes an audio and video stream according to the stream pushing bit rate.

When the media server of the second level re-aggregates the first aggregated bandwidth information, a similar manner of generating the first aggregated bandwidth information may also be adopted. Specifically, each bandwidth interval may still be traversed, and for any target bandwidth interval therein, the sum of the aggregated quantities of subscripted clients in the target bandwidth interval may be accumulated according to a plurality of pieces of first aggregated bandwidth information, and a second candidate available bandwidth after re-aggregation may be determined according to a plurality of first candidate available bandwidths corresponding to the target bandwidth interval. The logic for determining the second candidate available bandwidth after the re-aggregation may be the same as the logic for determining the first candidate available bandwidth in the first aggregated bandwidth information.

**In** the present embodiment, after obtaining the above-mentioned sum of the aggregated quantities and the second candidate available bandwidth, it is possible to take the sum of the aggregated quantities and the second candidate available bandwidth as interval information about the target bandwidth interval after re-aggregation, and after generating corresponding interval information after re-aggregation for each bandwidth interval in the plurality of preset bandwidth intervals, it is possible to take a set of each piece of interval information generated after re-aggregation as the second aggregated bandwidth information.

Taking Fig. 4 as an example, the first level includes two media servers that may upload respective first aggregated bandwidth information to the media servers of the second level. The two pieces of first aggregated bandwidth information may be respectively represented in the form of vectors as:

$$C3=[0, 1, 0, 1]$$

$$C4=[0, 3.5, 0, 10]$$

and

$$C5=[0, 1, 1, 0]$$

$$C5=[0, 2, 6, 0]$$

By re-aggregating the two pieces of first aggregated bandwidth information, the second aggregated bandwidth information may be obtained:

$$C6=[0, 2, 1, 1]$$

$$C7=[0, 3.5, 6, 10]$$

The media server of the second level may push the second aggregated bandwidth information to the publishing client, and the publishing client may determine the stream pushing bit rate and encode the audio and video stream according to the method described in step S15.

In one embodiment, the media server of the second level may be followed by a media server of a third level or a higher level, requiring only layer-by-layer aggregation in a similar manner. Specifically, the media server may upload the second aggregated bandwidth information to a next-level media server, such that the next-level media server re-aggregates the received each piece of the second aggregated bandwidth information, and pushes third aggregated bandwidth information obtained by re-aggregation to the publishing client.

It can be seen that in the technical solutions of one or more embodiments of the present disclosure, the media server may acquire the available bandwidth information about each subscripted client, and then may generate corresponding discrete bandwidth information for each subscripted client. The discrete bandwidth information may record the actual available bandwidth of the subscripted client and the bandwidth interval in which the available bandwidth is located. Subsequently, the media server may aggregate the discrete bandwidth information about each subscripted client so as to obtain aggregated bandwidth information. In the aggregated bandwidth information, for each bandwidth interval, the aggregation number of the subscripted clients under the bandwidth interval in which the available bandwidth is located may be counted, and one candidate available bandwidth may be set for each bandwidth interval. In this way, after the media server pushes the aggregated bandwidth information to the publishing client, the publishing client may learn the current distribution of the available bandwidth of each subscripted client. For the distribution of the available bandwidths of the subscripted clients, the publishing client may generate a stream pushing bit rate that matches the available bandwidth of most subscripted clients. **In** this way, after the audio and video stream encoded according to the stream pushing bit rate is pushed to each subscripted client, the communication quality of most subscripted clients may be ensured, thereby improving the overall communication quality of the multi-person communication process.

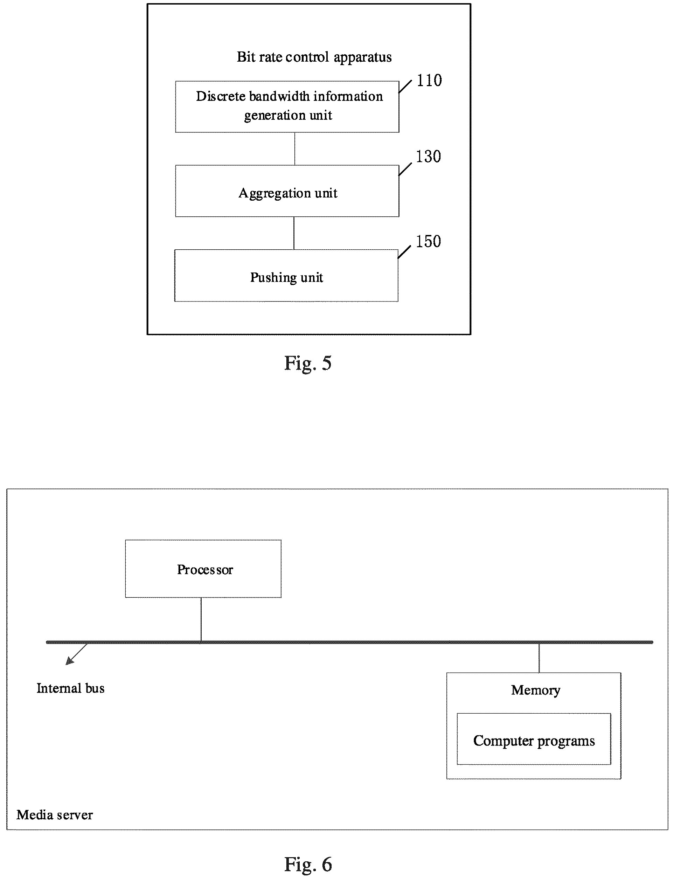

Referring to Fig. 5, an embodiment of the present disclosure further provides a bit rate control apparatus, including:

a discrete bandwidth information generation unit 110 configured for generating discrete bandwidth information for a plurality of subscripted clients based on available bandwidth information of the plurality of subscripted clients, the discrete bandwidth information indicating an available bandwidth allocated for the subscripted clients and a bandwidth interval where the available bandwidth is located;

an aggregation unit 130 configured for aggregating a plurality of pieces of the discrete bandwidth information into aggregated bandwidth information, wherein the aggregated bandwidth information indicates a candidate available bandwidth of each bandwidth interval and an aggregation number of the subscripted clients in each bandwidth interval; and

a pushing unit 150 configured for pushing the aggregated bandwidth information to a publishing client, wherein the aggregated bandwidth information is used for the publishing client to determine a stream pushing bit rate.

Here, the specific processing logic of each functional module may be described with reference to the foregoing description of the method embodiments, and will not be described in detail herein.

Referring to Fig. 6, the present disclosure also provides a media server, including a memory and a processor, wherein the memory is configured to store computer programs which, when executed by the processor, implement the bit rate control method described above.

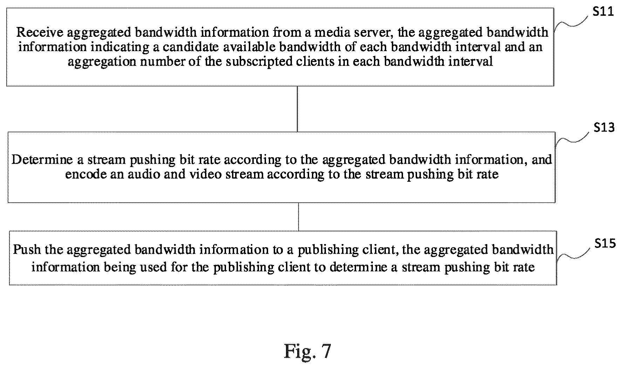

The present disclosure also provides a bit rate control method which may be applied to the above-mentioned publishing client, and Referring to Fig. 7, the method may include the following steps.

S21: Receive aggregated bandwidth information from a media server, the aggregated bandwidth information indicating a candidate available bandwidth of each bandwidth interval and an aggregation number of the subscripted clients in each bandwidth interval.

S23: Determine a stream pushing bit rate according to the aggregated bandwidth information, and encode an audio and video stream according to the stream pushing bit rate.

S25: Push an encoded audio and video stream to each subscripted client.

In this embodiment, the publishing client may receive the aggregated bandwidth information pushed by the media server. The specific manner of generating the aggregated bandwidth information can be seen from the description of the foregoing method embodiments. By parsing the aggregated bandwidth information, the publishing client may learn the distribution situation of the available bandwidths of the subscripted clients participating in the multi-person communication at present. Thus, according to a preset rule, the publishing client may determine the stream pushing bit rate according to the distribution of the available bandwidths.

In particular, in an embodiment, the publishing client may take a maximum candidate available bandwidth or a minimum candidate available bandwidth in the aggregated bandwidth information as the stream pushing bit rate to meet the requirements of different application scenarios. In addition, it is also possible to determine a target bandwidth interval with a maximum aggregation number of subscripted clients in the aggregated bandwidth information, and take the candidate available bandwidth corresponding to the target bandwidth interval as the stream pushing bit rate. This may enable the stream pushing bit rate to match the network environment of most subscripted clients.

Of course, after understanding the main concept of the present disclosure, a person skilled in the art can also determine the stream pushing bit rate in more ways. However, any stream pushing bit rate being determined on the basis of the aggregated bandwidth information should fall within the scope of protection of the present disclosure.

In one embodiment, considering that the media server would have a default encoding rule, for example, that a 720P audio and video stream may be encoded according to the code stream of 3 Mb/s, the present disclosure may generate a multi-bit rate audio and video stream in order to be compatible with the existing encoding rules. Specifically, in response to an existence of a preset stream pushing bit rate, the publishing client may still determine the stream pushing bit rate matching the network environment of the subscripted clients in the manner of the preceding steps, and then may respectively encode the audio and video streams according to the determined stream pushing bit rate and the preset stream pushing bit rate so as to form a multi-bit rate audio and video stream, and push the multi-bit rate audio and video stream to each subscripted client via the media server. The purpose of such processing is that in some scenarios, network optimization functionality may be provided in the subscripted client. When the function is started, the subscripted client may load the audio and video stream encoded according to the determined stream pushing bit rate; and when the function is closed, a subscripted client may load the audio and video stream encoded according to the preset stream pushing bit rate, such that the technical solution of the present disclosure may be compatible with the existing SFU architecture.

An embodiment of the present disclosure further provides a bit rate control apparatus, including:

> an information receiving unit configured for receiving aggregated bandwidth information from a media server, wherein the aggregated bandwidth information indicates a candidate available bandwidth of each bandwidth interval and an aggregation number of the subscripted clients in each bandwidth interval;
> a bit rate determination unit configured for determining a stream pushing bit rate according to the aggregated bandwidth information, and encoding an audio and video stream according to the stream pushing bit rate; and
> an audio and video stream pushing unit configured for pushing an encoded audio and video stream to each subscripted client.

Here, the specific processing logic of each functional module may be described with reference to the foregoing description of the method embodiments, and will not be described in detail herein.

An embodiment of the present disclosure further provides a terminal device, including a memory and a processor, wherein the memory is configured to store computer programs which, when executed by the processor, implement the bit rate control method applied to the publishing client as described above.

Each unit described in the above embodiment can be implemented by a computer chip or a product with a certain function. A typical implementation device is a computer. Specifically, the computer may be, for example, a personal computer, a laptop computer, a cellular phone, a camera phone, a smart phone, a personal digital assistant, a media player, a navigation device, an email device, a game console, a tablet computer, a wearable device or a combination of any of these devices.

For the convenience of description, when describing the above devices, the functions are divided into various units and described separately. Of course, the functions of each unit may be implemented in one or more pieces of software and/or hardware when the present disclosure is implemented.

The present disclosure also provides a computer-readable storage medium, which is used for storing a computer program, and when the computer program is executed by a processor, the bit rate control method described above is implemented.

The processor may be a Central Processing Unit (CPU). The processor may also be other general-purpose processors, Digital Signal Processor (DSP), application specific integrated circuits (ASIC), Field-Programmable Gate Array (FPGA) or other programmable logic devices, discrete gate or transistor logic devices, discrete hardware components and other chips, or a combination of the above-mentioned chips.

As a non-transient computer-readable storage medium, the memory may be used to store non-transient software programs, non-transient computer-executable programs and modules, such as program instructions/modules corresponding to the method in the embodiment of the present disclosure. The processor executes various functional applications and data processing of the processor by running non-transient software programs, instructions and modules stored in the memory, that is, the method in the above method embodiment is implemented.

The memory may include a storage program area and a storage data area, wherein the storage program area may store an operating system and an application program required by at least one function; The storage data area may store data created by the processor, etc. In addition, the memory may include high-speed random access memory and non-transient memory, such as at least one disk memory device, flash memory, or other non-transient solid-state memory devices. In some embodiments, the memory may optionally include memory remotely located with respect to the processor, and these remote memories may be connected to the processor through a network. Examples of the above networks include, but are not limited to, the Internet, an intranet, a local area network, a mobile communication network, and combinations thereof.

It can be understood by those skilled in the art that all or part of the processes in the methods of the above embodiments can be completed by instructing related hardware through a computer program, which can be stored in a computer-readable storage medium, and when executed, the program can include the processes of the above embodiments. The storage medium may be a magnetic disk, an optical disk, a Read-Only Memory (ROM), a Random Access Memory (RAM), a Flash Memory, a Hard Disk Drive (HDD) or a Solid-State Drive (SSD). The storage medium may also include a combination of the above kinds of memories.

Each embodiment in this disclosure is described in a progressive way, and only the same and similar parts between the embodiments may be referred to each other, and each embodiment focuses on the differences from other embodiments. Especially, for the embodiment of the device, the device and the storage medium, because it is basically similar to the method embodiment, the description is relatively simple, and it is only necessary to refer to part of the description of the method embodiment for relevant points.

The above is only an example of the present disclosure, and is not used to limit the present disclosure. Various modifications and variations will be made to the present disclosure by those skilled in the art. Any modification, equivalent substitution, improvement, etc. made within the spirit and principle of this disclosure should be included in the scope of the claims of this disclosure.

Although the embodiments of the present disclosure have been described in connection with the drawings, various modifications and variations can be made by those skilled in the art without departing from the spirit and scope of the present disclosure, and such modifications and variations are all within the scope defined by the appended claims.

## Claims

1. A bit rate control method, comprising:

   generating discrete bandwidth information for a plurality of subscripted clients based on available bandwidth information of the plurality of subscripted clients, the discrete bandwidth information indicating an available bandwidth allocated for the subscripted clients and a bandwidth interval where the available bandwidth is located;
   aggregating a plurality of pieces of the discrete bandwidth information into aggregated bandwidth information, the aggregated bandwidth information indicating a candidate available bandwidth of each bandwidth interval and an aggregation number of the subscripted clients in each bandwidth interval; and
   pushing the aggregated bandwidth information to a publishing client, the aggregated bandwidth information being used for the publishing client to determine a stream pushing bit rate.

2. The method according to claim 1, wherein the aggregating a plurality of pieces of the discrete bandwidth information into aggregated bandwidth information comprises:

   with regard to any target bandwidth interval in a plurality of preset bandwidth intervals, according to a plurality of pieces of the discrete bandwidth information, counting the aggregation number of the subscripted clients of which the available bandwidths are located in the target bandwidth interval, and according to a plurality of available bandwidths located in the target bandwidth interval, determining the candidate available bandwidth, wherein interval information about the target bandwidth interval comprises the aggregation number and the candidate available bandwidth; and
   aggregating a set of the interval information corresponding to each bandwidth interval in the plurality of preset bandwidth intervals into the aggregated bandwidth information.

3. The method according to claim 2, wherein the determining the candidate available bandwidth comprises:

   taking a maximum available bandwidth or a minimum available bandwidth from the plurality of available bandwidths located within the target bandwidth interval as the candidate available bandwidth;
   or
   performing weighted summation on the plurality of available bandwidths located within the target bandwidth interval, and taking a resulting available bandwidth as the candidate available bandwidth.

4. The method according to claim 1, wherein the generating discrete bandwidth information for a plurality of subscripted clients comprises:

   generating an interval discrete vector and a bandwidth discrete vector according to a plurality of preset bandwidth intervals, vector elements in both the interval discrete vector and the bandwidth discrete vector being all **in** one-to-one correspondence with the plurality of preset bandwidth intervals;
   determining the bandwidth interval where the available bandwidth allocated for the subscripted clients is located, setting a flag value for a vector element corresponding to the bandwidth interval where the available bandwidth is located in the interval discrete vector, and setting an available bandwidth value for the vector element corresponding to the bandwidth interval where the available bandwidth is located in the bandwidth discrete vector; and
   taking a combination of an assigned interval discrete vector and an assigned bandwidth discrete vector as the discrete bandwidth information about the subscripted clients.

5. The method according to claim 4, wherein the aggregating a plurality of pieces of the discrete bandwidth information into aggregated bandwidth information comprises:

adding interval discrete vectors in the pieces of the discrete bandwidth information to obtain an interval aggregation vector;

traversing the plurality of preset bandwidth intervals, with regard to any target bandwidth interval therein, identifying each available bandwidth value corresponding to the target bandwidth interval in the bandwidth discrete vector of each piece of the discrete bandwidth information, and determining the candidate available bandwidth of the target bandwidth interval according to each available bandwidth value as identified;

after determining a corresponding candidate available bandwidth for each bandwidth interval in the plurality of preset bandwidth intervals, generating a bandwidth aggregation vector containing each candidate available bandwidth; and taking a combination of the interval aggregation vector and the bandwidth aggregation vector as the aggregated bandwidth information obtained by aggregation.

6. The method according to any one of claims 1-5, wherein after the aggregating a plurality of pieces of the discrete bandwidth information into aggregated bandwidth information, the method further comprises:

uploading the aggregated bandwidth information to a next-level media server, such that the next-level media server re-aggregates the aggregated bandwidth information as received, and pushes the aggregated bandwidth information obtained by re-aggregation to the publishing client.

7. The method according to any one of claims 1-6, further comprising:

in response to receiving a plurality of pieces of first aggregated bandwidth information uploaded by an upper-level media server, re-aggregating the plurality of pieces of the first aggregated bandwidth information into second aggregated bandwidth information, and pushing the second aggregated bandwidth information to the publishing client, such that the publishing client determines the stream pushing bit rate according to the second aggregated bandwidth information, and encodes an audio and video stream according to the stream pushing bit rate.

8. The method according to claim 7, wherein the re-aggregating a plurality of pieces of the first aggregated bandwidth information into second aggregated bandwidth information comprises:

with regard to any target bandwidth interval in the plurality of preset bandwidth intervals, according to a plurality of pieces of the first aggregated bandwidth information, accumulating a sum of aggregated quantities of the subscripted clients in the target bandwidth interval, and according to a plurality of first candidate available bandwidths corresponding to the target bandwidth interval, determining a second candidate available bandwidth after re-aggregation; and

taking the sum of the aggregated quantities and the second candidate available bandwidth as interval information about the target bandwidth interval after re-aggregation, and after generating corresponding interval information after re-aggregation for each bandwidth interval in the plurality of preset bandwidth intervals, taking a set of each piece of interval information generated after re-aggregation as the second aggregated bandwidth information.

9. The method according to claim 7, further comprising: uploading the second aggregated bandwidth information to a next-level media server, such that the next-level media server re-aggregates each piece of the second aggregated bandwidth information as received, and pushes third aggregated bandwidth information obtained by re-aggregation to the publishing client.

10. A bit rate control apparatus, comprising:

a discrete bandwidth information generation unit configured for generating discrete bandwidth information for a plurality of subscribed clients based on available bandwidth information of the plurality of subscribed clients, the discrete bandwidth information indicating an available bandwidth allocated for the subscribed clients and a bandwidth interval where the available bandwidth is located;

an aggregation unit configured for aggregating a plurality of pieces of the discrete bandwidth information into aggregated bandwidth information, the aggregated bandwidth information indicating a candidate available bandwidth of each bandwidth interval and an aggregation number of the subscripted clients in each bandwidth interval; and

a pushing unit configured for pushing the aggregated bandwidth information to a publishing client, the aggregated bandwidth information being used for the publishing client to determine a stream pushing bit rate.

11. A media server, comprising a memory and a processor, wherein the memory is configured to store computer programs which, when executed by the processor, perform the method according to any one of claims 1 to 9.

12. A bit rate control method, comprising:

receiving aggregated bandwidth information from a media server, the aggregated bandwidth information indicating a candidate available bandwidth of each bandwidth interval and an aggregation number of the subscribed clients in each bandwidth interval;
determining a stream pushing bit rate according to the aggregated bandwidth information;
encoding an audio and video stream according to the stream pushing bit rate; and
pushing an encoded audio and video stream to each subscripted client.

13. The method according to claim 12, wherein the determining a stream pushing bit rate according to the aggregated bandwidth information comprises:

taking a maximum candidate available bandwidth or a minimum candidate available bandwidth in the aggregated bandwidth information as the stream pushing bit rate;
or
determining a target bandwidth interval with a maximum aggregation number of the subscripted clients in the aggregated bandwidth information, and taking the candidate available bandwidth corresponding to the target bandwidth interval as the stream pushing bit rate.

14. The method according to claim 12 or claim 13, further comprising:
when there is a preset stream pushing bit rate, respectively encoding the audio and video stream according to a determined stream pushing bit rate and the preset stream pushing bit rate to form a multi-bit rate audio and video stream, and pushing the multi-bit rate audio and video stream to each subscripted client.

15. A bit rate control apparatus, comprising:

an information receiving unit configured for receiving aggregated bandwidth information from a media server, the aggregated bandwidth information indicating a candidate available bandwidth of each bandwidth interval and an aggregation number of the subscribed clients in each bandwidth interval;
a bit rate determination unit configured for determining a stream pushing bit rate according to the aggregated bandwidth information, and encoding an audio and video stream according to the stream pushing bit rate; and
an audio and video stream pushing unit configured for pushing an encoded audio and video stream to each subscripted client.

16. A terminal device, comprising a memory and a processor, wherein the memory is configured to store computer programs which, when executed by the processor, perform the method according to any one of claims 12 to 14.

17. A computer-readable storage medium, wherein the computer-readable storage medium is configured to store computer programs which, when executed by a processor, perform the method according to any one of claims 1 to 9 or the method according to any one of claims 12 to 14.

On the basis of available bandwidth information of a plurality of subscription clients, generate discrete bandwidth information for the subscription clients, the discrete bandwidth information indicating an available bandwidth allocated to the subscription clients and a bandwidth interval where the available bandwidth is located

S11

Aggregate a plurality of pieces of the discrete bandwidth information into aggregated bandwidth information, the aggregated bandwidth information indicating a candidate available bandwidth of each bandwidth interval and the aggregation number of the subscription clients in each bandwidth interval

S13

Push the aggregated bandwidth information to a publishing client, the aggregated bandwidth information being used for the publishing client to determine a stream pushing bitrate

S15

Fig. 1

[0, 0, 0, 7.5]

[0, 3, 0, 0]

Media server A

[0, 3, 0, 7.5]

Fig. 2

S111

Generate an interval discrete vector and a bandwidth discrete vector according to a plurality of preset bandwidth intervals, vector elements in both the interval discrete vector and the bandwidth discrete vector being all in one-to-one correspondence with the plurality of preset bandwidth intervals

S113

Determine the bandwidth interval where the available bandwidth allocated for the subscripted clients is located, set a flag value for the vector element corresponding to the located bandwidth interval in the interval discrete vector, and set an available bandwidth value for the vector element corresponding to the located bandwidth interval in the bandwidth discrete vector

S115

Taking a combination of an assigned interval discrete vector and an assigned bandwidth discrete vector as the discrete bandwidth information about the subscripted clients

Fig. 3

Media server

Media server

[0, 1, 0, 1]
[0, 3.5, 0, 10]

Media server

[0, 2, 1, 1]
[0, 3.5, 6, 10]

[0, 1, 1, 0]
[0, 2, 6, 0]

Fig. 4

Bit rate control apparatus

Discrete bandwidth information
generation unit
110

Aggregation unit
130

Pushing unit
150

Fig. 5

Processor

Internal bus

Memory

Computer programs

Media server

Fig. 6

Receive aggregated bandwidth information from a media server, the aggregated bandwidth information indicating a candidate available bandwidth of each bandwidth interval and an aggregation number of the subscripted clients in each bandwidth interval $\qquad$ S11

Determine a stream pushing bit rate according to the aggregated bandwidth information, and encode an audio and video stream according to the stream pushing bit rate $\qquad$ S13

Push the aggregated bandwidth information to a publishing client, the aggregated bandwidth information being used for the publishing client to determine a stream pushing bit rate $\qquad$ S15

Fig. 7

## INTERNATIONAL SEARCH REPORT

| International application No. |
| --- |
| **PCT/CN2024/076593** |

### A. CLASSIFICATION OF SUBJECT MATTER

H04L 65/80(2022.01)i

According to International Patent Classification (IPC) or to both national classification and IPC

### B. FIELDS SEARCHED

Minimum documentation searched (classification system followed by classification symbols)

IPC: H04L; H04N

Documentation searched other than minimum documentation to the extent that such documents are included in the fields searched

Electronic data base consulted during the international search (name of data base and, where practicable, search terms used)

CNTXT, CNKI, ENTXT, ENTXTC, VEN: 带宽, 码率, 最多, 更多, 数量, 人数, 统计, 分布, 区间, bandwidth, code rate, max, more, number, statistics, distribution, interval

### C. DOCUMENTS CONSIDERED TO BE RELEVANT

| Category* | Citation of document, with indication, where appropriate, of the relevant passages | Relevant to claim No. |
| --- | --- | --- |
| X | CN 106658072 A (LE HOLDINGS (BEIJING) CO., LTD. et al.) 10 May 2017 (2017-05-10) description, paragraphs 0002-0117 | 1-17 |
| A | CN 111385574 A (BEIJING BYTEDANCE NETWORK TECHNOLOGY CO., LTD.) 07 July 2020 (2020-07-07) entire document | 1-17 |
| A | US 2021051350 A1 (BEIJING DAJIA INTERCONNECTION INFORMATION TECHNOLOGY CO., LTD.) 18 February 2021 (2021-02-18) entire document | 1-17 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **09 May 2024** | **15 May 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| | International application No. |
|---|---|
| | **PCT/CN2024/076593** |

| Patent document cited in search report | | | Publication date (day/month/year) | Patent family member(s) | | | Publication date (day/month/year) |
|---|---|---|---|---|---|---|---|
| CN | 106658072 | A | 10 May 2017 | None | | | |
| CN | 111385574 | A | 07 July 2020 | None | | | |
| US | 2021051350 | A1 | 18 February 2021 | WO | 2020015678 | A1 | 23 January 2020 |
| | | | | CN | 109040801 | A | 18 December 2018 |

Form PCT/ISA/210 (patent family annex) (July 2022)

**EP 4 672 714 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310139262